# EUROPEAN PATENT APPLICATION

(11) **EP 3 822 786 A1**
(43) Date of publication of application: **19.05.2021**
(21) Application number: 19208680.9
(22) Date of filing: 12.11.2019
(51) Int. Cl.: G06F 9/50

(54) **A DATA PROCESSING SYSTEM AND A METHOD FOR CONTROLLING A DATA PROCESSING SYSTEM**

(71) Applicant: Visteon Global Technologies, Inc., Van Buren Township, MI 48111 (US)
(72) Inventor: WILMER, Thorsten, 76646 Bruchsal (DE); WANG, Kai, 76275 Ettlingen (DE); KOPFSTEDT, Thomas, 76227 Karlsruhe (DE)
(74) Representative: MERH-IP Matias Erny Reichl Hoffmann Patentanwälte PartG mbB

(57) **Abstract**

A data processing system and a method for controlling a data processing system is shown. The data processing system includes a plurality of data processing units, wherein each of the data processing units has a predetermined criticality, and at least one component, which may be a sensor, an actuator or a data processing unit. The data of the component may be stored in/read from a storage unit of a data processing unit having the highest criticality by the plurality of data processing units.

## Description

### FIELD

One or more embodiments described herein relate to a data processing system, such as for a vehicle, and a method for controlling a data processing system comprising a plurality of data processing units and related storage units.

### BACKGROUND

To increase comfort and safety of occupants in a vehicle, various units, like an adaptive cruise control (ACC), a radar sensor system, a steering system, entertainment systems, etc. were developed. This led to an increased number of data processing units in a vehicle. In many cases, data processing units rely among others on data used by a plurality of data processing units and on data provided by other data processing units. Thus, data management becomes more and more complex by an increasing number of data processing units and a larger amount of data to be processed. The plurality of data processing units sharing data among each other is denoted in the following as a data processing system.

### SUMMARY

One or more embodiments relate to a data processing system. The data processing system may comprise at least one component and a plurality of data processing units for processing data of said component. Each of said data processing units may comprise at least one data storage unit, and to each of said data processing units, a predetermined criticality may be allocated.

In some embodiments a data processing unit may additionally comprise a control and/or a computation unit. A data processing unit may examine data, may output data based on input data and/or read data via an output interface and/or may be configured to execute program code. Non-limiting examples for a component may be a data processing unit of the plurality of data processing units, another data processing unit, an actuator and/or a sensor. The criticality may represent relevance of a unit, in particular, with respect to the consequences of a failure of the unit. A criticality may be allocated to a data processing unit in accordance with the standard ISO 26262 titled "Road vehicles-functional safety".

A storage unit may comprise a static and/or a flash storage, for example storage based on ROM and/or RAM technologies. The storage of the storage unit may comprise in some embodiments a control unit for controlling storage access and data storing operations. By reducing distance of a connection between a storage region and a computation unit, access times may be improved.

According to an aspect, said data processing system may be configured such that data of said at least one component may be stored in and/or read from a storage region of the storage unit of a data processing unit, to which the highest criticality among criticalities of the plurality of data processing units is allocated, by the plurality of data processing units and/or by the at least one component. A storage region may be a single storage cell, a plurality of storage cells, a complete storage device, etc. Thus, the data of a component may be stored in the storage region of a data processing unit having the highest criticality. This may have the advantage, that failing of units with a lower criticality may affect units with a higher criticality as less as possible. Further, access times of high critical data processing units on shared data may be improved, since the data is stored in the storage unit of the data processing unit with the highest criticality. This may improve real-time ability of, in particular, high critical systems. Storing data in a storage region may comprise writing data to a storage region and reading data may include retrieving data.

According to an aspect, the system may be configured to allow only one single data processing unit to store in a predetermined storage region of the storage unit of the data processing unit. In some embodiments, a data processing unit may be configured to control reading access to at least a storage region of a data processing unit. In some embodiments, a data processing unit may be configured to control storing access to at least one storage region of at least one data processing unit. In some embodiments, reading access and/or storing access may be controlled by a single unit of the system for a plurality of storage regions of a plurality of data processing units. This may have the advantage that errors may be reduced, in particular errors caused by systems not being allowed to store in the predetermined region.

According to an aspect, the storage unit of a data processing unit may comprise a plurality of storage regions with predetermined criticalities. Partitioning a storage in storage regions having several criticalities may improve data management. In particular access by data processing units with a lower criticality than a predetermined criticality to data may be limited with low effort. This may enhance data security. Further, reliability of data may be increased, since unnecessary data access by data processing units can be prevented a *priori.* In some embodiments, two or more storage regions may have the same criticality.

Accordingto an aspect, data of said at least one component may be stored in and/or read from a storage region of the storage unit, wherein the criticality of the storage region corresponds to the lowest criticality among the criticalities of the plurality of data processing units. This may have the advantage that safety of data may be improved with low effort, in particular access to data, which are not affected by data processing units having a low criticality, may be exclusively provided to units with the corresponding criticality in an effective manner.

According to a further aspect, an access to a storage region by a data processing unit comprising the storage region may have a higher priority than an access of a remote data processing unit. A data processing unit having the highest criticality among the plurality of data processing units accessing specific data may host the specific data. As a consequence, the data processing unit with the highest criticality may have priority in accessing data. This may have the effect, that a unit with a high criticality may have instantaneous access to relevant data without suspension or waiting time. This may be relevant, in particular, for data processing units with real-time requirements.

According to a further aspect, storing in and/or reading from a storage region of the storage unit of a data processing unit may be allowed to multiple data processing units at the same time. This may have the advantage, that two or more data processing units may not obstruct each other while accessing to a common storage region.

According to an aspect, a data processing unit reading data from the storage region of a storage unit of a data processing unit is configured to check validity and quality of said data. This may have the effect that data processing units, in particular data processing units with a high criticality may not wait until it is ensured that data transmission to, for example, a data processing unit having a low criticality, has been successful.

Accordingto an aspect, if two or more data processing units have a highest criticality among the criticalities of the plurality of data processing units, data of said at least one component is stored in and/or read from a storage region of the storage unit of a data processing unit, to which the highest criticality is allocated and which stores the data, by the plurality of data processing units and/or by the at least one component. Thus, storing may have a higher priority than reading, if criticality of two units is identical. This may have the advantage, that correctness of stored data may be increased and that in the storage always the latest data is available for the plurality of data processing units. Providing the updated data may improve the results of the plurality of data processing units in general. Storing data in a storage region may include providing access to data to a data processing unit having access to the storage region.

According to another aspect, allocated criticalities may be at least one of the following group: quality management (QM); automated safety integrity level A (ASIL-A); automated safety integrity level B (ASIL-B); automated safety integrity level C (ASIL-C); and automated safety integrity level D (ASIL-D). This classification is in conformity with the ISO 26262 standard. Classifying criticalities uniformly in a standardized manner may increase compatibility between data processing units and may improve design and implementation of complex data processing systems.

According to an aspect, at least one data processing unit may be configured as a system on a chip (SoC). This may have the advantage, that sharing data between systems on a chip may be possible without copying data of a component from one data processing unit, for example a system on a chip, to another data processing unit, for example a system on a chip, while a required time period for reading data in particular for data processing units with a high criticality may be reduced.

According to another aspect, at least one component may be one of the following group: sensor; actuator; and data processing unit. A sensor may be for example, a LIDAR sensor, a radar sensor, a capacitive sensor, etc. An actuator may be, for example, a steering wheel actuator, a pedal actuator, an engine control, etc. A data processing unit may be, for example, a gaze detection unit, an automated driving system (ADS), an adaptive cruise control (ACC), etc.

According to an aspect, the data processing system may comprise an advanced driver assistance system (ADAS) of a vehicle; and the at least one component may include at least one sensor of the vehicle providing data to be processed by the advanced driver assistance system and/or at least one actuator of the vehicle reading, receiving and/or retrieving data from the advanced driver assistance system.

According to an further aspect, data exchange between components of the vehicle and the data processing units may be managed by the advanced driver assistance system providing a memory map for storage units to ensure that data of said at least one component may be stored in and/or read from a storage region of the storage unit of a data processing unit, to which the highest criticality among criticalities of the plurality of data processing units is allocated, by the plurality of data processing units and/or by the at least one component.

One or more embodiments relate to a method for controlling a data processing system. The method may comprise a step of providing a plurality of data processing units for processing data of a component, each of said data processing units comprising at least one data storage unit, wherein to each of said data processing units a predetermined criticality is allocated. In further steps the highest criticality among the criticalities of the plurality of data processing units may be determined and a storage region of a storage unit of a data processing unit, to which the highest criticality is allocated, may be determined. The method may comprise a step of storing the data of the component in the determined storage region and/or reading the data of the component from the determined storage region.

According to an aspect, only one single data processing unit may be allowed to store in the determined storage region of the storage unit of the data processing unit.

According to another aspect, the storage unit of a data processing unit may comprise a plurality of storage regions with predetermined criticalities.

According to a further aspect, the method may comprise a step of determining the lowest criticality among the criticalities of the plurality of data processing units, wherein the data of the component may be stored in and/or read from a storage region of the storage unit of the data processing unit, wherein the criticality of the storage region corresponds to the determined lowest criticality.

According to an aspect, reading from and/or storing in a storage region by a data processing unit comprising the storage region may have a higher priority than reading from and/or storing in of a remote data processing unit.

According to another aspect, storing in and/or reading from a storage region of the storage unit of a data processing unit may be allowed to multiple data processing units at the same time.

According to a further aspect, reading data from the storage region of the storage unit of a data processing unit may comprise checking validity and quality of said data by a data processing unit. The data processing unit reading data from the storage unit of a data processing unit or any other data processing unit may check validity and quality of the read data. Validity and quality may be checked with a checksum, with any kind of logical check and/or any other data validation method.

Accordingto an aspect, if two or more data processing units have a highest criticality of the plurality of data processing units, data of said at least one component may be stored in and/or read from a storage region of the storage unit of a data processing unit, to which the highest criticality is allocated and which stores the data, by the plurality of data processing units and/or by the at least one component.

According to an aspect, allocated criticalities may be at least one of the following group: quality management (QM), automated safety integrity level A (ASIL-A), automated safety integrity level B (ASIL-B), automated safety integrity level C (ASIL-C), and automated safety integrity level D (ASIL-D).

According to an aspect, at least one data processing unit may be configured as a system on a chip (SoC).

According to a further aspect, at least one component may be one of the following group: sensor, actuator, and data processing unit.

According to an aspect, the data processing system may comprise an advanced driver assistance system (ADAS) of a vehicle; and the at least one component may include at least one sensor of the vehicle providing data to be processed by the advanced driver assistance system and/or at least one actuator of the vehicle reading, receiving and/or retrieving data from the advanced driver assistance system.

According to an further aspect, data exchange between components of the vehicle and the data processing units may be managed by the advanced driver assistance system providing a memory map for storage units to ensure that data of said at least one component may be stored in and/or read from a storage region of the storage unit of a data processing unit, to which the highest criticality among criticalities of the plurality of data processing units is allocated, by the plurality of data processing units and/or by the at least one component.

According to a further aspect, one or more embodiments may provide an improved data processing system, which is configured to process large amounts of data. The data processing system may be configured to efficiently store and access data. The data processing system, in one or more embodiments, may include a plurality of data processing units.

### BRIEF DESCRIPTION OF THE DRAWINGS

Figure 1 shows a schematic illustration of a data processing system according to an embodiment.
Figure 2 shows a schematic illustration of a data processing system according to another embodiment.
Figure 3 shows a process flow which schematically illustrates a method for controlling a data processing system according to an embodiment.
Figure 4 shows a process flow which schematically illustrates a method for controlling a data processing system according to an embodiment.
Figure 5 illustrates an example for a data processing system in accordance to an embodiment.
Figure 6 illustrates another example of a data processing system in accordance to an embodiment.
Figure 7 illustrates an example for a data processing system in accordance to an embodiment.
Figure 8 illustrates an embodiment of a data processing system.
Figure 9 illustrates an example of a storage map of a storage unit of a data processing unit.
Figure 10 shows an example for a breakdown of the data processing system in layers.

### DETAILED DESCRIPTION OF THE INVENTION

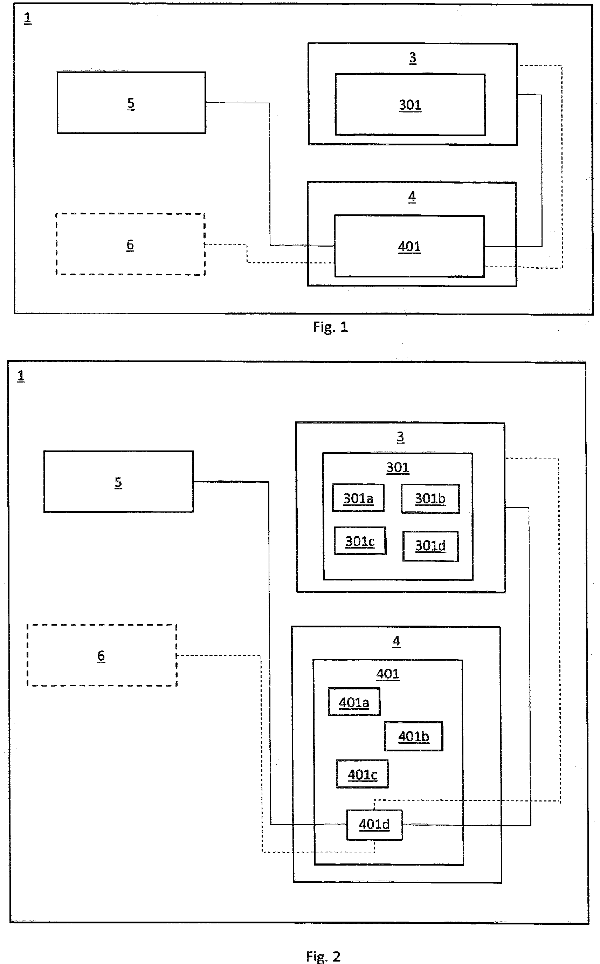

Figure 1 shows a schematic illustration of a data processing system according to an embodiment. The data processing system 1 may comprise a plurality of data processing units 3, 4 and at least one component 5, 6, wherein each data processing unit 3; 4 may include a storage unit 301; 401. A criticality of a first data processing unit 3 may be determined to be lower than a criticality of a second data processing unit 4. A criticality of a data processing unit may be adapted in dependence of failures of other data processing units. A data processing system may be, for example an advanced driver assistance system (ADAS). In some embodiments an advanced driver assistance system (ADAS) may be a data processing unit. A component may be for example a sensor, an actuator, a further data processing unit or the first or the second data processing unit. A component may have m input ports and n output ports, wherein either m or n may also be zero. A data processing unit may be in particular a system on chip. Non-limiting examples are a sensor system, a lane keeping assist system, an actuator, like an engine control, etc. The storage unit may comprise static and/or flash memory. At least one storage region of the storage unit may be configured to be written and/or read remotely.

Both data processing units 3, 4 may utilize specific data of the components 5, 6. Since the criticality of the second data processing unit 4 is higher than the criticality of the first data processing unit 3, the data specific of the components 5, 6 may be stored in the storage unit 401 of the second data processing unit 4. The first data processing unit 3 may retrieve the specific data generated by the component 5 from the storage unit 401 and may retrieve the specific data generated for the component 6 from the storage unit 401. In some embodiments, retrieving data may include copying the specific data from the storage unit 401 to a storage region of the first data processing unit. In some embodiments, retrieving data may include reading the specific data directly from the storage unit 401, when utilized in computations, in executing program code, etc. by the first data processing unit.

The specific data may be retrieved via a BUS connection, like PCI (Peripheral Component Interconnect) Express, in particular PCI Express 4.0 - 8.0, Ethernet, a HSSL (High Speed Serial Link) bus, USB (Universal Serial Bus), etc. The BUS connection may be configured to allow remote access to storage regions, for example reading and/or storing. Storing may comprise writing data into a storage region. PCI Express and a directly shared storage region of a storage unit of a remote data processing unit may have the advantage that there may no operating system be involved while two data processing units are communicating.

Alternatively, a communication may be provided via shared memory within the data processing system or with an explicit copy of the data to/from the storage unit of a data processing unit with the allocated storage region either via shared memory and with a queue of operation or via Ethernet or SPI or any other connection where a protocol of copy operations is implemented.

In some embodiments storing data to a specific storage region may be limited to a single data processing unit. This may enhance validity and security of data, since it may be ensured that no other data processing unit may write to the specific storage region intentional or accidental.

In some embodiments, a criticality of a data processing unit may be adapted in dependence of failures of other data processing units. For example, a LIDAR system and a radar system may be used for determining distances of a vehicle in an automated driving mode to vehicles, obstacles and persons in front of the vehicle. Then, criticality of a data processing unit processing data of a radar system may be raised, if a data processing unit processing data of the LIDAR system fails.

In some embodiments, a criticality of a data processing unit once determined in a data processing system may be maintained even if another data processing unit or a component fails.

Figure 2 shows a schematic illustration of a data processing system according to another embodiment. The data processing system 1 may comprise at least one component 5, 6 and a plurality of data processing units 3, 4, wherein each data processing unit 3; 4 may comprise a storage unit 301; 401. Each of the storage units 301; 401 may include storage regions 301a, 301b, 301c, 301d; 401a, 401b, 401c, 401d corresponding to predetermined different criticalities.

Since both data processing units 3, 4 may have the same criticality, but the data processing unit 4 is providing (writing, storing) the data for the components 5, 6 the data may be stored in the storage unit 401. Further, since both data processing units 3, 4 may have the highest criticality, the data for the components 5, 6 may be stored in a storage region 401d of the storage unit 401 having the highest criticality. The components 5, 6 and the data processing unit 3 may retrieve the corresponding data from the storage region 401d.

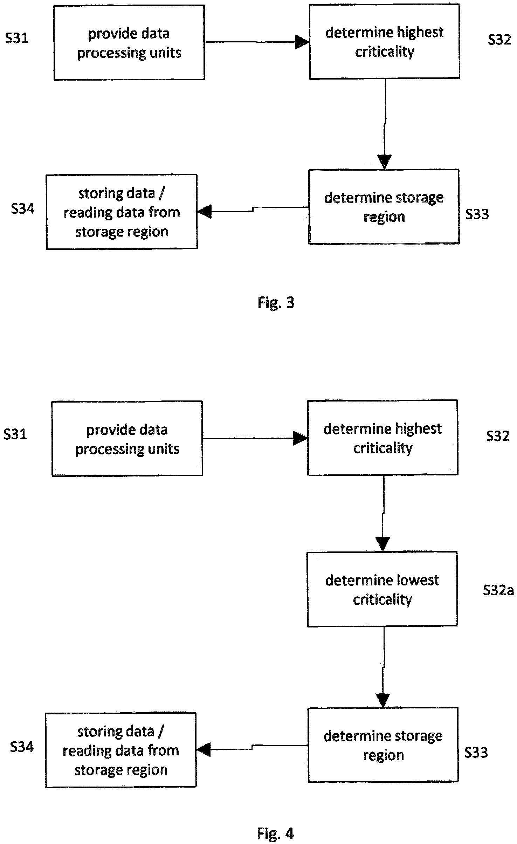

Figure 3 shows a process flow which schematically illustrates a method for controlling a data processing system. The method may be applied on a data processing system to obtain a data processing system in accordance with the data processing systems shown in Figures 1, 2, 5-7. It may be possible to change the order of single steps, to summarize steps and/or to add new steps without changing the functionality of the described process. It may be also possible to execute some steps in parallel.

In a first process step S31, data processing units accessing a specific data may be provided, wherein each data processing unit may include a storage unit. A data processing unit may be a sensor system, a lane keeping assistant, an engine control system, etc. To each data processing unit, a criticality may be allocated. The criticality may give a measure for a data processing unit's relevance, which may include replaceability, consequences of a failure and/or necessity. In some embodiments, the criticality may be allocated in accordance with the standard ISO 26262.

In a further process step S32, the highest criticality among the criticalities of the plurality of data processing units may be determined. Based on the determined highest criticality, a storage region in the storage unit of a data processing unit, to which the highest criticality is allocated, may be determined in step S33. In step S34, the plurality of data processing units may store in and/or retrieve/read data from the storage region determined in step S33.

Figure 4 shows a process flow, which schematically illustrates a method for controlling a data processing system according to an embodiment. The method shown in the process flow of Figure 4 is based on the method shown in the process flow of Figure 3. The method may be applied on a data processing system to obtain a data processing system in accordance with the data processing systems shown in Figures 2, 6 and 9. In addition to the method shown in the process flow of Figure 3, the storage units of the data processing units may comprise a plurality of storage regions, with different criticalities. Further, after the step S32 of determining a highest criticality, a lowest criticality among the plurality of data processing units may be determined in a step S32a. In step S33, based on the result of the step S32, a storage unit of a data processing unit, to which the highest criticality is allocated, may be determined and, based on the result of step S32a, a storage region in the determined storage unit may be determined, wherein the storage region may have the determined lowest criticality.

The order of steps may be changed and further steps may be added without changing functionality. It may be possible to execute steps in parallel.

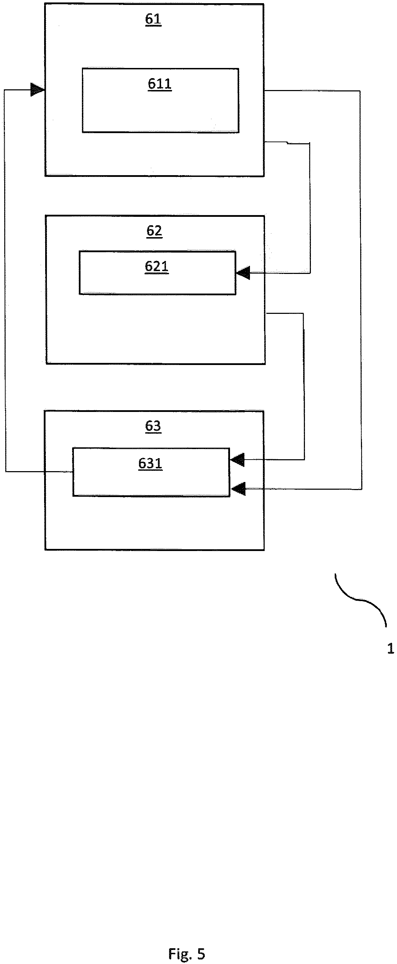

Figure 5 illustrates an example for a data processing system in accordance to an embodiment. For clarity reasons, the arrows in this figure represent the direction of data flows of specific data. Although, the arrows may imply only a one directional communication, a bidirectional communication may be possible, in particular to retrieve the specific data, to check validity of retrieved data and/or for corresponding protocol data of, for example, a BUS connection.

The example system of Figure 5 comprises three data processing units 61, 62, 63, wherein each of the data processing units 61; 62; 63 includes a storage unit 611; 621; 631. Let the criticality in this example be in accordance with the ISO 26262 standard. Thus, the data processing unit 61 may have a criticality of ASIL-A, the data processing unit 62 may have a criticality of ASIL-B and the data processing unit 63 may have a criticality of ASIL-C. Alternatively, any other classification representing a measure for criticality, importance, etc. of a data processing unit may be applied

The data processing unit 61 may provide data to the data processing units 62 and 63. Since the criticality of the data processing units 62 and 63 is higher than the criticality of the data processing unit 61, the data may be stored in the storage units 621 and 631, respectively. Further, the data processing unit 62 may provide data to the data processing unit 63, which has a higher criticality than the data processing unit 62. Thus, the corresponding data may be stored in the storage unit 631. Thus, a specific data which is accessed by three data processing units is stored in the storage unit of the data processing unit having the highest criticality among the data processing units accessing the specific data. This may ensure that the data processing unit having the highest criticality may have a fast and safe access to the specific data, although a data processing unit with a lower criticality may store the specific data. In particular, in data processing systems, where access to a storage unit by a data processing unit comprising the storage unit may have a higher priority than a remote access, stability and reliability with respect of the system having the highest criticality may be improved significantly.

The data processing unit 63 may provide data for the data processing unit 61. Since the criticality of the data processing unit 63 is higher than the criticality of the data processing unit 61, the corresponding data may be stored in the storage unit 631.

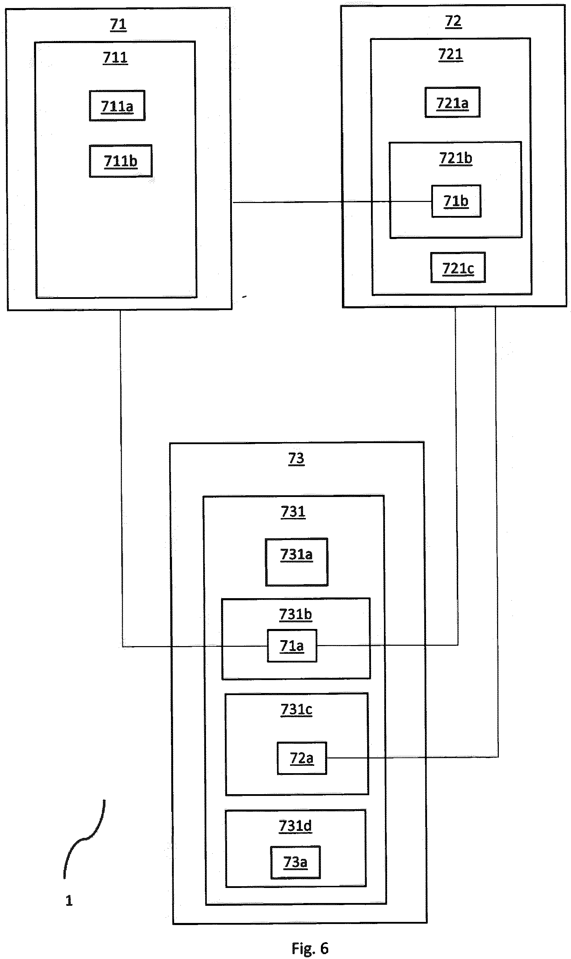

Figure 6 illustrates another example of a data processing system in accordance to an embodiment. The data processing system comprises in this example three data processing units 71, 71, 73, wherein each of the data processing units 71; 72; 73 includes a storage unit 711; 721; 731, respectively. To each of the data processing units 71; 72; 73 a criticality may be allocated. For example, the data processing unit 71 may have a criticality of ASIL-A, the data processing unit 72 a criticality of ASIL-B and the data processing unit 73 a criticality of ASIL-C.

As an example, the data processing unit 71 may be the slave of the data processing unit 73 and the data processing unit 73 may be the slave of the data processing unit 72.

A specific data may be stored in the storage unit of a data processing unit having the highest criticality among a plurality of data processing units accessing the specific data. Thus, in a storage unit of a data processing unit data may be stored, where the data processing unit may have the highest criticality among a plurality of data processing units accessing the data.

As a consequence, the storage unit 711 may include storage regions 711a; 711b with a criticality of QM and ASIL-A, respectively. The storage unit 721 may include storage regions 721a; 721b; 721c with a criticality of QM, ASIL-A and ASIL-B, respectively. The storage unit 731 may include storage regions 731a; 731b; 731c, 731d with a criticality of QM; ASIL-A, ASIL-B and ASIL-C, respectively. Each of the storage units 711; 721; 731 may comprise also further storage regions, for example a storage region with a criticality of ASIL-D, but these may be unused.

To the data processing unit 71, a first component providing data 71a to the data processing units 71, 72 and 73 may be allocated. Since the data processing unit 73 may have the highest criticality among the data processing units, the data 71a may be stored in the storage unit 731 of the data processing unit 73. Further, because the lowest criticality among the criticalities of the data processing units accessing the data 71a is ASIL-A (criticality of the data processing unit 71), the data 71a may be stored in the storage region 731b of the storage unit 731. Thus, it may be easily possible to limit access of a data processing unit, in particular of a data processing unit having a low criticality, to storage regions having the criticality of the data processing unit and lower. This may have the advantage that failures of a data processing unit having a high criticality caused by a data processing unit having a low criticality may be avoided as much as possible. In particular, failures based on storage failures may be avoided. Thus, the stability and reliability of a system having a high criticality is improved.

Referring to a second component of the data processing unit 72 providing data 72a for the data processing units 72 and 73, the data may be stored in the storage unit 731 of the data processing unit 73, since the criticality of the data processing unit 73 is higher than the criticality of the data processing unit 72. Further, since the lowest criticality among the data processing units accessing the data 72a is ASIL-C (criticality of the data processing unit 72), the data 72a is stored in the storage region 731c.

Data 73a of a component of the data processing unit 73 may be accessed by the data processing unit 73 only. Thus, the data may be stored in the storage region 731d of the storage unit 731.

The data processing unit 71 may comprise a second component reading data 71b, which is stored by the data processing unit 71 and read by the data processing unit 72. Since the data processing unit 72 has a higher criticality (ASIL-B) than the data processing unit 71 (ASIL-A), the data 71b may be stored in the storage unit 721 of the data processing unit 72. Further, because the lowest criticality among the data processing units accessing the data 71b is ASIL-A (criticality of the data processing unit 71), the data 71b is stored in the storage region 721b.

In some embodiments, some of the data 71a, 71b, 72a, 73a may be stored statically in one or more storage regions. Thus, access may be simplified with one or more static storage addresses. This may reduce data processing, when corresponding data is accessed, and, thus, speed of data access may be enhanced. Further, storage access errors may be avoided. It may also have the effect, that necessity for an operating system managing storage access may be avoided.

In some embodiments, some of the data 71a, 71b, 72a, 73a may be stored dynamical in storage regions. Thus, flexibility, in particular with respect to the plurality of data processing units of the data processing system may be increased, while storage usage may be increased.

In some embodiments, a storage region may have a plurality of predetermined criticalities. Thus, classification of data processing units with respect to criticalities may be subtler than classification of criticalities of storage regions. This may have the advantage that storage usage may be improved, since unnecessary storage reservations for each criticality may be avoided. Thus, storage costs may be reduced while classification of data processing units in criticalities may be more subtle with respect to importance of a data processing unit.

Some embodiments may comprise systems and components of Figure 5 as well as of Figure 6, wherein systems and components may be mixed up.

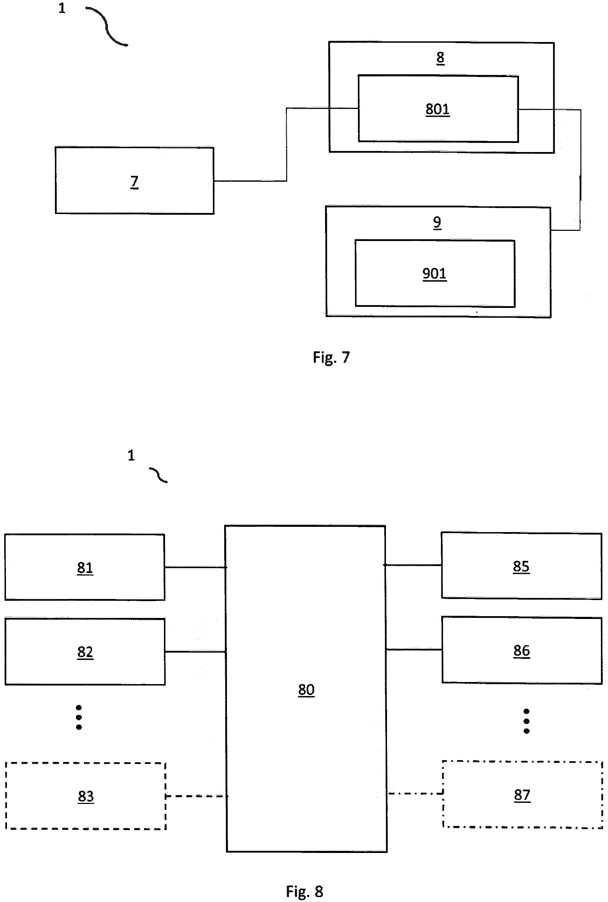

Figure 7 illustrates an example for a data processing system in accordance to an embodiment. The data processing system comprises in this example two data processing units 8, 9, wherein each of the data processing units 8; 9 has a storage unit 801, 901, respectively. Further, there may be a component 7, for example a steering wheel actuator. The data processing unit 8 may provide the data for the steering wheel actuator 7 and may have thus the highest criticality, for example in ISO 26262 ASIL-D. The data processing unit 8 may be a steering wheel actuation system. The data processing unit 9 may only read the data for the steering wheel actuator 7 and may be, for example, a steering actuator control unit 9 for monitoring functionality, in particular performance, of the steering wheel actuator. The steering actuator control unit 9 may also have the highest criticality, ASIL-D in ISO 26262.

Since both data processing units 8, 9 have the same criticality, the data may be stored in the storage region of a data processing unit having the highest criticality and providing/storing the data. Thus, the data for the steering wheel actuator 7 is stored in the storage unit 801 of the data processing unit 8.

Both data processing units may be implemented on a chip each, for example as a system on a chip (SoC). A chip may be a programmable logic device (PLD), like a FPGA (field programmable gate array), a microcontroller, a non-programmable logic device, etc. Examples for a runtime of a microcontroller may be Autosar, Linux and QNX. The data processing units 8 and 9 may communicate at least one directional and in some embodiments bidirectional. For communication a protocol may be used, which may require in some embodiments a bidirectional communication. In some other embodiments, there may be no need for a protocol.

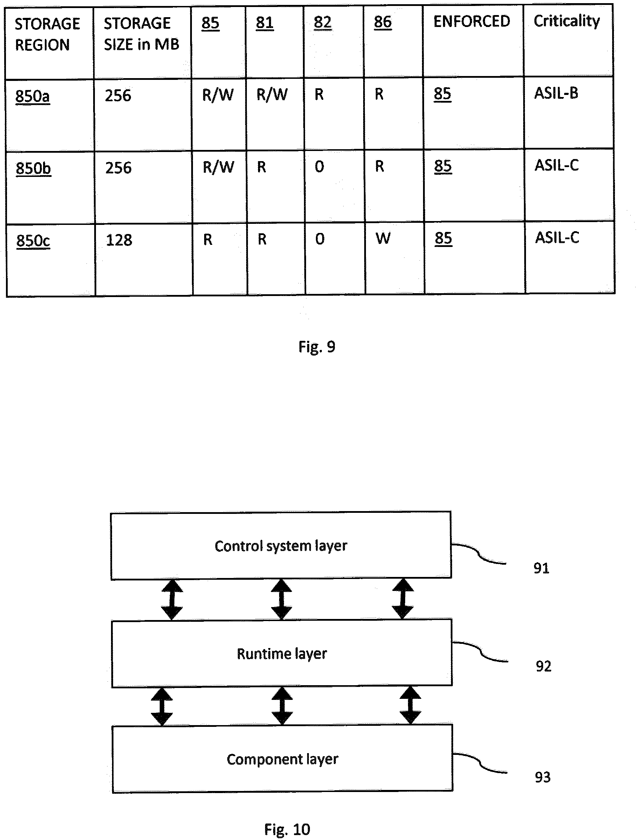

Figure 8 illustrates an embodiment of a data processing system. The components 81, 82, 83 shown in Figure 8 are connected with the data processing units 85, 86, 87 via a circuit 80. The circuit may provide one or more wireless connections and/or one or more line-connections. Non-limiting examples for wireless connections may be a wireless LAN (WLAN) connection, a Bluetooth connection, a Near Field Communication (NFC), an Infrared connection, etc. Non-limiting examples for line-connections may be connections via a semiconductor connection, a printed and/or sintered circuit, a cable, in particular a chopper cable, a glass fiber cable, etc. To an expert it would be obvious to combine such connections via ports to obtain further connections. The circuit 80 may be configured to provide a connection between components and storage units, between data processing units and storage units, between two or more storage units. It may be possible that parts of a connection may be used by one or more data processing units and/or one or more components. The connections provided by the circuit 80 for a data processing unit 85; 86; 87 may be shown in a storage map, as shown, for example, in Figure 9.

Figure 9 illustrates an example of a storage map of a storage unit of a data processing unit. The storage map may show storage access of components and/or data processing units to storage regions 850a, 850b, 850c of a storage unit of a data processing unit 85. The storage region 850a may have a storage size of 256 megabytes. The allocated criticality may be ASIL-B. Further, it may be determined that the data processing unit 85 controls the access (reading from/storing in) of the storage region 850a (ENFORCED). Further, it is shown that the data processing units 85 and the component 81 may be allowed to store in (W) and read from (R) the storage region 850a, wherein the data processing unit 86 and the component 82 are only allowed to read from (R) the storage region 850a.

Access of the storage region 850b with a size of 256 megabytes is monitored by the data processing unit 85, which is allowed to read from and store in the storage region 850b. Further, the data processing unit 86 and the component 81 are allowed to read from the storage region 850b of the storage unit of the data processing unit 85. The component 82 may have neither reading nor writing access to the storage region 850b having a criticality of ASIL-C.

The storage region 850c may have a storage size of 128 megabytes and a criticality of ASIL-C. The data processing unit 85 and the component 81 may be allowed to read from (R) the storage region 850c and the component 86 may be allowed to store in (W) the storage region 850c. The data processing unit 86 may control (ENFORCED) the access on the storage region 850c.

In some embodiments, a storage map may comprise less information and, in some embodiments, a storage map may comprise further information.

In some embodiments, the data processing system may comprise a plurality of data processing units relating to automated driving functionalities and at least one component relating to a vehicle sensor, a data processing unit and/or an actuator of the vehicle. The data processing system may comprise an advanced driver assistance system (ADAS) of a vehicle, wherein, for example, component 81 may be a velocity measurement sensor, component 82 may be a headlamp levelling actuator, data processing unit 85 may be a cruise control and data processing unit 86 may be an engine control unit. Both, the cruise control 85 and the engine control unit 86 may have a criticality of ASIL-D. In the storage region 850a, a measured velocity of the automated driving vehicle may be stored in by the velocity measurement sensor 81 unless the velocity measurement sensor 81 is in an error mode. Then, the cruise control 85 may store a value representing a measured velocity in the storage region 850a.

The cruise control 85 may store a value representing a tire pressure determined by the cruise control in the storage region 850b. The tire pressure may be determined by means of the measured velocity and by means of not shown measured revolutions per minute of a tire.

The engine control unit 86 may store an engine control value in the storage region 850c, which may provide information about an expected velocity of the automated driving vehicle.

In some embodiments, the data processing system and/or the storage map may comprise further components and/or sensors not shown in Figures 8 and 9.

Figure 10 shows an example for a breakdown of the data processing system in layers. For clarity reasons and different requirements, the data processing unit may be shown differently in dependence on a chosen layer. An example for a layer may be a control system layer, wherein components and units may be grouped with respect to data processing units, which may refer to automated driving functionalities of an automated driving vehicle. This layer may show software aspects of the data processing system. Another example for a layer may be a component layer, wherein components and data processing units and their relation are shown from hardware aspects.

To bridge the gap between the component layer 93, which may comprise, for example, sensors and actuators, and the control system layer showing automated driving functionality of an automated vehicle, a layer, like a DriveCore runtime layer 92, may be introduced for managing data exchange, data access and storage access between data processing units providing automated driving functionality of the automated driving vehicle. Automated driving functionality of an automated vehicle may be implemented/realized, for example, as software programs running on data processing units. Figures 1, 2, 5,6, 7 may be examples for such a DriveCore runtime layer 92. Showing a data processing system in a DriveCore runtime layer 92 may be advantageous, in particular, for embedded programming.

### REFERENCE NUMERALS

| | |
|---|---|
| 1 | data processing system |
| 3, 4, 8, 9, 61, 62, 63, 71, 72, 73, 85, 86 | data processing units |
| 5, 6, 7, 81, 82 | components |
| 301,401, 611, 621, 631, 711, 721, 731,801, 901 301a, 301b, 301c, 301d, 401a, 401b, 401c, 401d, 711a, 711b, 721a, 721b, 721c, 731a, 731b, 731c, | storage units |
| 731d, 850a, 850b, 850c, | storage regions |
| 71a, 71b, 72a, 73a | data |
| 80 | circuit |
| ASIL-A, ASIL-B, ASIL-C, ASIL-D, QM | criticalities |
| R, W | storage access |
| 91 | control system layer |
| 92 | runtime layer |
| 93 | component layer |

## Claims

1. A data processing system comprising:
at least one component,
a plurality of data processing units for processing data of said component, each of said data processing units comprising at least one data storage unit, wherein to each of said data processing units a predetermined criticality is allocated,
wherein said data processing system is configured such that
data of said at least one component is stored in and/or read from a storage region of the storage unit of a data processing unit, to which the highest criticality among criticalities of the plurality of data processing units is allocated, by the plurality of data processing units and/or by the at least one component.

2. A data processing system according to claim 1, wherein
the system is configured to allow only one data processing unit to store in a predetermined storage region of the storage unit of the data processing unit.

3. A data processing system according to claim 1 or 2, wherein
the storage unit of a data processing unit comprises a plurality of storage regions with predetermined criticalities.

4. A data processing system according to claim 3, wherein
the data of said at least one component is stored in and/or read from a storage region of the storage unit, wherein the criticality of the storage region corresponds to the lowest criticality among the criticalities of the plurality of data processing units.

5. A data processing system according to one of claims 1 to 4, wherein
an access to a storage region by a data processing unit comprising the storage region has a higher priority than an access of a remote data processing unit.

6. A data processing system according to one of the previous claims, wherein
storing in and/or reading from a storage region of the storage unit of a data processing unit is allowed to multiple data processing units at the same time.

7. A data processing system according to one of claims 1 to 6, wherein
a data processing unit reading data from the storage region of a storage unit of a data processing unit is configured to check validity and quality of said data.

8. A data processing system according to one of the previous claims, wherein,
if two or more data processing units have a highest criticality of the plurality of data processing units, data of said at least one component is stored in and/or read from a storage region of the storage unit of a data processing unit, to which the highest criticality is allocated and which stores the data, by the plurality of data processing units and/or by the at least one component.

9. A data processing system according to one of the previous claims, wherein allocated criticalities are at least one of the following group:
- quality management (QM)
- automated safety integrity level A (ASIL-A)
- automated safety integrity level B (ASIL-B)
- automated safety integrity level C (ASIL-C)
- automated safety integrity level D (ASIL-D).

10. A data processing system according to one of the previous claims, wherein
at least one data processing unit is configured as a system on a chip (SoC).

11. A data processing system according to at least one of the previous claims, wherein at least one component is one of the following group:
- sensor
- actuator
- data processing unit.

12. A data processing unit according to at least one of the previous claims, wherein
the data processing system comprises an advanced driver assistance system (ADAS) of a vehicle;
the at least one component includes at least one sensor of the vehicle providing data to be processed by the advanced driver assistance system and/or at least one actuator of the vehicle reading, receiving and/or retrieving data from the advanced driver assistance system; and
data exchange between components of the vehicle and the data processing units is managed by the advanced driver assistance system providing a memory map for storage units to ensure that data of said at least one component is stored in and/or read from a storage region of the storage unit of a data processing unit, to which the highest criticality among criticalities of the plurality of data processing units is allocated, by the plurality of data processing units and/or by the at least one component.

13. A method for controlling a data processing system comprising the steps:
- providing a plurality of data processing units for processing data of a component, each of said data processing units comprising at least one data storage unit, wherein to each of said data processing units a predetermined criticality is allocated
- determining the highest criticality among the criticalities of the plurality of data processing units
- determining a storage region of a storage unit of a data processing unit, to which the highest criticality is allocated
- storing the data of the component in the determined storage region and/or reading the data of the component from the determined storage region.

14. A method for controlling a data processing system according to claim 13, wherein
only one data processing unit is allowed to store in the determined storage region of the storage unit of the data processing unit.

15. A method for controlling a data processing system according to claims 13 or 14, wherein
the storage of the storage unit of a data processing unit comprises a plurality of storage regions with predetermined criticalities.
